Europäisches Patentamt

European Patent Office

Office européen des brevets

(11) Numéro de publication: **0 207 196**

**A1**

# (12) DEMANDE DE BREVET EUROPEEN

(21) Numéro de dépôt: 85201054.5

(22) Date de dépôt: 02.07.85

(51) Int. Cl.⁴: **C 04 B 22/04**
//C04B14/34

(43) Date de publication de la demande:
**07.01.87 Bulletin 87/2**

(84) Etats contractants désignés:
**AT BE CH DE FR GB IT LI LU NL SE**

(71) Demandeur: **SOLVAY & Cie (Société Anonyme)**
**Rue du Prince Albert, 33**
**B-1050 Bruxelles(BE)**

(72) Inventeur: **Gutmann, Paul**
**Farwood drive, 105**
**Moreland Hills Ohio 44022(US)**

(72) Inventeur: **Holm, Donald**
**Carriage Hill drive, 1594**
**Hudson Ohio 44236(US)**

(54) **Mélange pour béton et couche de surface obtenue à partir de ce mélange.**

(57) Le mélange est constitué de ciment Portland et de particules de ferrosilicium ayant une teneur en silicium ne dépassant pas 20% et ayant des dimensions situées entre 6 mm et 200 mesh.

Il convient particulièrement pour être appliqué comme couche de surfaces résistantes à l'usure et à l'oxydation et accroissent le coefficient de réflexion de la lumière.

-1-

Mélange pour béton et couche de surface obtenue
à partir de ce mélange

Cas S. 85/10

SOLVAY & Cie (Société Anonyme)

Il est connu d'utiliser des couches de surface pour plancher contenant du fer métallique. On connaît également les avantages qui peuvent être obtenus grâce à ces couches de surface ainsi que les problèmes qui se sont présentés depuis que ces couches ont été mises en place au début des années 1900. L'un des premiers brevets relatifs à un mélange métallique applicable par secouement est le brevet Etats-Unis 1.113.112 au nom de S.W. Flesheim. Ce brevet divulgue de l'emploi de déchets de perçage en fer métallique combinés avec du ciment Portland en diverses proportions suivant le type désiré de couche de surface métallique pour plancher désiré.

Dans les premiers temps, ce mélange contenant des déchets de perçage en fer métallique fut probablement le seul utilisé pour améliorer la résistance à l'usure des planchers industriels. Il est apparu au fil du temps, après l'installation de nombreux planchers de ce type, que l'emploi de déchets de perçage en fer métallique pose quelques problèmes. Par exemple, le plancher présente une coloration très foncée et un mauvais coefficient de réflexion de la lumière. Quand le plancher entre en contact avec de l'eau et/ou avec des ions de chlorure de calcium, soit que ce dernier ait été incorporé dans le mélange de béton pour accélérer les temps de prise, soit qu'il ait été déposé sur la surface à partir de véhicules ayant circulé dans les rues pendant l'hiver - quand du chlorure avait été déposé sur les routes pour favoriser le déneigement - il se produit manifestement une oxydation importante des déchets de perçage en fer métallique. L'éclatement de la surface dû à la dilatation provoquée par l'oxydation de particules métalliques donne lieu à la désintégration, au tachage et au marquage par des matières oxydées, ce qui rend en général le plancher peu agréable à la vue.

-2-

Au cours des années, on a appliqué divers revêtements sur les mélanges contenant des déchets de perçage en fer métallique et sur les couches de surface fraîchement placées par secouement, par exemple du caoutchouc chloré vulcanisé, des agents d'étanchéité et d'autres types de matières obturantes. Toutefois, aux endroits exposés à un trafic important, le mince revêtement s'use au bout d'un certain temps et les particules de fer métallique sont de nouveau exposées à l'atmosphère. On a constaté, par conséquent, que l'installation de couches de surface contenant du fer métallique est soumise à des limitations. Elles doivent, en général, être installées dans des entrepôts secs et dans des emplacements d'usine secs. Si on place une couche de surface contenant du fer métallique à l'extérieur, il se produit presque immédiatement une oxydation de la surface du fait des conditions climatiques. Aux endroits où se trouvent des réfrigérateurs et dans les installations de traitement de produits alimentaires qui doivent maintenir un niveau de propreté très élevé, il y a toujours de grandes quantités d'eau et d'agents de nettoyage. On a pu constater, peu après l'installation de ces planchers, l'apparition d'une oxydation importante et d'un aspect peu agréable à la vue.

Au cours des années, on a incorporé divers produits chimiques dans les couches de surface contenant du fer métallique, ainsi qu'on peut le voir dans le brevet Etats-Unis 3.668.150. Dans ce brevet, on décrit l'incorporation de nitrite de sodium dans le mélange contenant du fer métallique afin d'empêcher l'oxydation des particules de fer. Bien que l'on arrive ainsi, en fait, à empêcher l'oxydation initiale, dès que les particules sont exposées à l'action de l'eau, des chlorures et de l'air, l'oxydation se produit aussi rapidement que dans un mélange qui ne comporte pas de nitrite de sodium.

Dans le brevet Etats-Unis 1.348.099, on décrit l'emploi de déchets de perçage ou de tournures de fer plaqués de cuivre comme produit de finition de la surface de planchers en béton. Néanmoins, le plaquage de particules de fer en vue d'en retarder l'oxydation est non seulement onéreuse, mais son efficacité est limitée. Au

-3-

bout d'un certain temps, le plaquage s'érode et l'oxydation des particules commence.

Suivant le brevet Etats-Unis 1.056.069, on incorpore une matière contenant du carbure de silicium (c'est-à-dire du carborundum) dans le béton en vue de produire une surface de plancher résistante à l'usure.

Dans le brevet Etats-Unis 1.802.667, on décrit une composition de ciment Portland qui comprend de l'aluminium et du ferrosilicium. Il y est décrit que l'on ajoute, le ferrosilicium en vue de le faire réagir avec l'hydroxyde de calcium. On présume que par réaction avec l'hydroxyde de calcium on forme un composé insoluble qui retarde la désintégration du béton en présence d'une eau porteuse de sel pouvant y pénétrer.

Un autre aspect de l'amélioration des compositions pour planchers est lié à la conservation de l'énergie que les sociétés tentent d'introduire. Ceci revient à la possibilité de placer un plancher résistant à l'abrasion dans les usines et les ateliers et aussi de maintenir certaines valeurs du coefficient de réflexion de la lumière. La couche de surface contenant du fer métallique étant extrêmement foncée on a ajouté divers pigments pour éclaircir les surfaces de plancher. Pendant des années, on a utilisé du ciment Portland blanc contenant du dioxyde de titane et d'autres agents éclaircissants. Mais le problème d'une oxydation rapide subsiste dès que, par l'usure, la surface du déchet de perçage en fer métallique foncé est exposée à l'eau et aux chlorures.

L'invention concerne un mélange pour béton convenant particulièrement pour réaliser la surface supérieure d'un plancher en béton caractérisé en ce qu'il comprend du ciment Portland et des particules de ferrosilicium ayant une teneur en silicium ne dépassant pas 20 % et ayant des dimensions situées entre 6 mm et 200 mesh, la totalité de ferrosilicium contenu dans le mélange étant chimiquement inerte à l'égard des autres constituants du mélange.

Le mélange peut être appliqué par secouement ("shake on").

L'invention porte également sur un tel mélange utilisé à l'état de mortier ou de coulis (mortier liquide) ainsi que sur les couches de surface obtenues à partir de ce mélange.

-4-

La présence d'un alliage ferreux dans la couche de surface, le mortier ou le coulis procure un bon coefficient de réflexion de la lumière, l'absence d'oxydation en présence d'eau et une résistance à l'abrasion et au choc supérieure aux endroits où la surface est exposée à la fois à une usure importante, à l'humidité et aux chlorures.

On sait globalement depuis de nombreuses années que les surfaces contenant des déchets de perçage en fer métallique procurent une résistance à l'abrasion plus élevée que celle d'un plancher en béton brut. On a trouvé, en utilisant une machine d'essai du National Bureau of Standards décrite par la norme ASTM-C 779-76, que les planchers normaux en béton s'usent en général d'environ 0,03-0,04 pouce par heure (0,762-1,016 mm/heure) d'essai. En utilisant le même temps et la même méthode d'essai, les planchers en béton qui comportent une couche de surface contenant des déchets de perçage en fer métallique ne s'usent que d'environ 0,007-0,009 pouce par heure (0,1778-0,2286 mm/h).

On a trouvé que l'emploi d'alliages ferreux comme constituant d'une couche de surface rend une surface de béton plus résistante à l'usure que lorsqu'on emploie des déchets de perçage en fer métallique. Si on utilise du ferrosilicium comme constituant d'une couche de surface, on constate - en utilisant la machine d'essai du National Bureau of Standards décrite ci-dessus - que le plancher en béton présente une résistance à l'usure de 0,004-0,005 pouce (0,1016-0,1220 mm). En moyenne, une couche de surface contenant du ferrosilicium présente une résistante à l'usure de 77 % plus élevée que celle obtenue avec les déchets de perçage en fer métallique.

Le fait que le ferrosilicium présente une résistance à l'usure plus élevée que les déchets de perçage en fer métallique est dû à sa dureté et à sa résistance liées au fait qu'il consiste en une combinaison de fer et de silicates. Le ferrosilicium est un alliage qui peut être produit dans un four à arc électrique ou dans un haut fourneau; il constitue un agrégat métallique extrêmement dur et brillant. Il peut aussi être obtenu dans un four à arc électrique pour la fabrication d'alumine à partir de bauxite. Il est alors un sous-produit du procédé de fabrication d'alumine à sec. Dans ce

procédé, un mélange de bauxites ferrugineuse et siliceuse contenant les proportions adéquates de fer, de silicium et de titane est d'abord fritté pour éliminer l'eau. Il doit y avoir suffisamment de fer et de silicium pour dissoudre la totalité du titane après la réduction et pour permettre de le déverser à l'état d'un alliage de ferrosilicium - aluminium-titane. La fritte est alors fondue dans un four électrique avec la quantité de coke nécessaire pour réduire toutes les impuretés et un peu d'alumine. L'alliage ferrosilicum-aluminium-titane est ensuite déversé de l'autre côté du four.

La composition chimique du sous-produit varie en fonction de la composition de la bauxite et de la quantité de titane présente.

Divers essais réalisés avec des ferrosiliciums et des produits chimiques qui attaquent les planchers industriels ont permis de cosntater que le ferrosilicium se maintient et est plus résistant à la corrosion que les déchets de perçage en fer et les agrégats naturels sous l'action de divers acides et divers produits chimiques. En raison de la nature du ferrosilicium, le coefficient de réflexion de la lumière est plus élevé que celui des déchets de perçage en fer métallique. Quantitativement, le coefficient de réflexion de la lumière du ferrosilicium est approximativement 25 % plus grand que celui des déchets de perçage en fer métallique. Les déchets de perçage en fer métallique ont une coloration extrêmement foncée et, même combinés avec du ciment Portland blanc et du dioxyde de titane, ils restreignent le coefficient de réflexion de la lumière. Comme le ferrosilicium est argenté et brillant par nature, il augmente le coefficient de réflexion de la lumière des couches de surface pour plancher.

Le ferrosilicium utilisé selon la présente invention peut comporter des proportions variables de silicium et d'autres métaux suivant l'application désirée. Les ferrosiliciums à faible teneur en silicium partent en général de 10 % de silicium et ne dépassent ordinairement pas 17-20 % de silicium. Le ferrosilicium à faible teneur en silicium peut contenir de petites proportions de chrome, de manganèse, de carbone, d'aluminium et de titane. Les ferrosiliciums à plus forte teneur en silicium comprennent nominalement

-6-

25 %, 50 %, 65 %, 75 %, 85 % et 90-95 % de silicium. Ils peuvent contenir de petites proportions de chrome, de manganèse, de carbone, d'aluminium et de titane.

Le ferrosilicium contenant 50 % de silicium est, de loin, le plus largement utilisé dans l'industrie et est employé à la fois comme agent de blocage dans un haut fourneau d'aciérie et comme produit d'addition à la poche. Les variétés à 10-15 % et 25 % de silicium sont quelquefois utilisées dans un four à sole et en fonderie pour bloquer la chaleur; elles peuvent aussi être utilisées comme désoxydants ajoutés avant l'addition d'alliages plus coûteux.

Les alliages de ferrosilicium sont disponibles dans le commerce sous forme de morceaux ou sous forme broyée. Suivant l'invention, on envisage l'emploi de ferrosilicium ayant des dimensions des particules de 6 mm à 200 mesh.

Plusieurs formes d'exécution de l'invention sont réalisables, quelques formes d'exécution sont illustrées dans les exemples qui suivent.

Dans les exemples ci-après, le ferrosilicium peut être utilisé comme constituant d'un revêtement pour planchers de béton applicable par secouement ("shake on").

Exemple 1

On réalise un mélange sec d'environ deux parties d'agrégat au ferrosilicium et une partie de ciment Portland gris, et on l'applique par secouement ("shake on") pour former des couches de surface pour planchers industriels et commerciaux.

Exemple 2

On réalise un mélange sec d'environ deux parties de ferrosilicium et une partie de ciment Portland blanc, on l'applique par secouement ("shake on") pour former des couches de surface pour planchers industriels et commerciaux.

Dans le cas d'une application comme constituant d'un revêtement applicable par secoucement ("shake on"), la teneur en silicium du ferrosilicium peut varier entre une petite proportion de 10 % et une grande proportion de 95 %. On peut obtenir des résultats excellents en employant du ferrosilicium contenant de 10 % à 20 % de silicium, 1 à 5 % d'aluminium, de 1 % à 5 % de titane, le reste étant du fer. Des éléments de moindre importance peuvent être présents sous la forme de carbone, de chrome, de manganèse et de phosphore. On peut toutefois utiliser d'autres proportions de silicium et d'autres métaux suivant l'application envisagée et le résultat désiré. Diverses proportions d'éléments supplémentaires peuvent être ajoutés en fonction du niveau de résistance à la corrosion désiré. L'addition de chrome et de manganèse donne un agrégat ayant une résistance modérée à la corrosion, tandis que l'addition d'aluminium et de titane produit un agrégat doté d'une grande résistance à la corrosion.

Les rapports de 2:1 des exemples 1 et 2 ci-dessus peuvent être modifiés suivant les circonstances. On peut utiliser des rapports de 3:1 (ferrosilicium/ciment Portland) ou plus élevés, ou bien des rapports de 1:1 ou des rapports inférieurs.

Les dimensions des particules du ferrosilicium utilisé pour une application par secouement ("shake on") peuvent, comme on l'a signalé plus haut, varier entre des grandes particules de 6 mm et des petites particules allant jusqu'à 200 mesh.

En plus de l'application du ferrosilicium en combinaison avec du ciment Portland (gris ou blanc), la présente invention envisage également une composition secouable de ferrosilicium (sans ciment ou autre matériau) sur la surface de pavements en béton ou en asphalte en vue de réaliser des marquages de voies carrossables ayant un grand coefficient de réflexion de la lumière et une grande résistance au dérapage. Pour cette application, le ferrosilicium ayant des dimensions de particules allant jusqu'à 6 mm peut être placé ou disséminé sur un plancher fraîchement coulé, suivant le dessin désiré et à l'endroit prévu. La structure en béton obtenue résiste bien à l'usure et aux chocs, est anti-dérapante, résiste bien à l'oxydation et présente un bon coefficient de réflexion de la lumière. Pour cette application, le ferrosilicium doit avoir un haut coefficient de réflexion de la lumière et l'addition de petits pourcentages d'aluminium et de titane peut améliorer cette propriété.

0207196

-8-

L'invention concerne aussi l'emploi de ferrosilicium pour des applications à l'état de mortiers pour des planchers industriels ou d'autres structures en béton. Ces applications sous forme de mortier peuvent consister en une couche de surface sur un plancher existant, un tablier de pont et d'autres applications. Les exemples suivants illustrent cette forme d'exécution de l'invention.

Exemple 3

On réalise un mélange sec de trois parties de ferrosilicium et de 1 partie de ciment Portland gris, et on l'applique sous forme de mortier sur des planchers industriels et d'autres structures industrielles.

Le rapport de 3:1 du ferrosilicium au ciment Portland décrit à l'exemple 3 ci-dessus convient pour les applications industrielles à haute performance. Pour les applications plus exigeantes, on peut utiliser un rapport ferrosilicium/ciment Portland de 1:1 à de 2:1. L'agrégat peut aussi comprendre du sable ou de la pierre.

Si l'on désire obtenir un coefficient de réflexion de la lumière plus élevé, on peut utiliser du ciment Portland blanc comme décrit ci-après.

Exemple 4

On réalise un mélange sec de trois parties de ferrosilicium et de 1 partie de trois parties de ferrosilicium et de 1 partie de ciment Portland blanc, et on l'applique sous forme de mortier sur des planchers industriels et d'autres structures industrielles.

La présente invention concerne encore l'emploi de ferrosilicium comme agrégat dans du ciment Portland utilisé à l'état d'un coulis (mortier liquide). Les coulis sont utilisés dans l'industrie, notamment dans les machines de nivellement. On utilise un coulis de haute concentration si on désire obtenir une bonne résistance au choc.

Selon l'invention, on peut utiliser une proportion comprise entre 10-100 % de ferrosilicium dans le coulis total. Un exemple est décrit ci-après.

Exemple 5

On réalise un mélange sec de 10-20 % de ferrosilicium, 25 % de

sable, 50 % de ciment Portland, le restant étant constitué de plastifiants et on l'utilise comme coulis pour des applications industrielles.

Dans tous les exemples susmentionnés, la teneur en silicium du ferrosilicium peut varier entre une basse proportion de 10 % et une haute proportion de 95 %. On obtient d'excellents résultats avec une teneur en silicium de 10 à 20 %, une teneur en aluminium de 1 % à 5 %, une teneur en titane de 1 % à 5 %, le restant étant du fer. Des éléments moins importants peuvent être présents sous la forme de carbone, de chrome, de manganèse et de phosphore.

Les avantages du ferrosilicium en soi, tels que l'augmentation du coefficient de réflexion de la lumière, ont été discutés précédemment. L'invention comprend aussi l'addition au mélange de dioxyde de titane pour améliorer le coefficient de réflexion de la lumière.

La présente invention concerne encore le durcissement et le renforcement de la résistance à l'usure d'une structure en béton, telle qu'un plancher et une structure analogue, en vue d'en prolonger la durée de vie. Elle consiste à ajouter sur la surface du béton, avant sa prise, un mélange sec de ciment et de particules de ferrosilicium, à frotter celui-ci intimement en contact avec la surface de la structure de manière à mouiller cette dernière et, finalement, à lisser à la truelle en vue d'obtenir une surface lisse, polie. Les dimensions des particules du ferrosilicium, telles qu'on les envisage pour ce procédé, sont comprises entre des grandes particules de 6 mm et des petites particules jusqu'à 200 mesh. La teneur en silicium du ferrosilicium peut varier entre une faible teneur de 10 % à 20 % de silicium, la teneur en aluminium de 1 % à 5 % et la teneur en titane de 1 % à 5 %, le restant étant du fer. Des éléments de moindre importance peuvent être présents sous la forme de carbone, de chrome, de manganèse et de phosphore.

La présente invention concerne également l'emploi de ferrosilicium avec une résine polymérique pour former un mortier ou une couche de surface sur des planchers industriels et commerciaux et des structures analogues. Une couche de surface de ce type procure

0207196

-10-

de la résistance à l'usure et de la résistance aux produits chimiques et elle peut être mise en oeuvre dans des hôpitaux, dans l'industrie alimentaire et applications analogues. On donne un exemple ci-après.

Exemple 6

On réalise un mélange de résines polymériques et de ferrosilicium, et on l'applique à l'état de mortier ou de couche de surface dans des structures telles que des planchers ou analogues.

Le mélange consiste en trois parties de particules de ferrosilicium et une partie de résine donnant de la résistance aux acides et de la résistance au choc.

Quand on désire utiliser la présente invention pour un mortier dans un milieu où règne une température élevée, par exemple la zone adjacente à un four à sole, on peut utiliser - avec du ferrosilicium - un ciment modifié pour résister à la chaleur. Un mélange de ciment résistant à la chaleur et de ferrosilicium applicable à l'état de mortier, de béton ou de couche de surface, dans des structures telles que des planchers ou analogues, peut comprendre entre 1 partie de ciment résistant à la chaleur pour 8 parties de ferrosilicium et 1 partie de ciment résistant à la chaleur pour 1 partie de ferrosilicium.

REVENDICATIONS

1 - Mélange pour béton convenant notamment pour réaliser la surface supérieure d'un plancher en béton caractérisé en ce qu'il comprend du ciment Portland et des particules de ferrosilicium ayant une teneur en silicium ne dépassant pas 20 % et ayant des dimensions situées entre 6 mm et 200 mesh, la totalité du ferrosilicium contenu dans le mélange étant chimiquement inerte à l'égard des autres constituants du mélange.

2 - Mélange suivant la revendication 1 caractérisé en ce que le rapport entre le ciment Portland et les particules de ferrosilicium est compris entre 1:1 et 1:3 en poids.

3 - Mélange suivant la revendication 1 caractérisé en ce que les particules de ferrosilicium consistent essentiellement en un alliage comprenant 10-20 % de silicium, 1-5 % d'aluminium, 1-5 % de titane, le restant étant du fer.

4 - Mélange suivant la revendication 1 caractérisé en ce que le ciment Portland est du ciment blanc.

5 - Mélange sec utilisable pour préparer un mortier de béton caractérisé en ce que ledit mélange amélioré comprend du ciment Portland et des particules de ferrosilicium ayant une teneur en silicium ne dépassant pas 20 % et ayant des dimensions situées entre 6 mm et 200 mesh, la totalité du ferrosilicium contenu dans le mélange étant chimiquement inerte à l'égard des autres constituants du mélange.

6 - Mélange sec suivant la revendication 5 caractérisé en ce que le rapport entre le ciment Portland et les particules de ferrosilicium est compris entre 1:1 et 1:3 en poids.

7 - Mélange sec suivant la revendication 5 caractérisé en ce que les particules de ferrosilicium consistent essentiellement en un alliage comprenant 10-20 % de silicium, 1-5 d'aluminium, 1-5 % de titane, le restant étant du fer.

0207196

-12-

8 - Mélange sec utilisable comme coulis de ciment caractérisé en ce que ledit mélange amélioré comprend du ciment Portland et des particules de ferrosilicium ayant une teneur en silicium ne dépassant pas 20 % et ayant des dimensions situées entre 6 mm et 200 mesh, la totalité du ferrosilicium contenu dans le mélange étant chimiquement inerte à l'égard des autres constituants du mélange.

9 - Mélange sec suivant la revendication 8 caractérisé en ce qu'on y ajoute du sable et des plastifiants, la composition obtenue comprenant 50 % de ciment Portland, 25 % de sable, 10-20 % de ferrosilicium et le reste consistant en plastifiants.

10 - Mélange sec suivant la revendication 8 caractérisé en ce qu'on y ajoute des plastifiants, la composition obtenue comprenant 50 % de ciment Portland, 40-50 % de ferrosilicium et le reste consistant en plastifiants.

11 - Couche de surface résistante à l'usure applicable sur des planchers industriels et structures analogues caractérisée en ce qu'elle comprend du ciment résistant à la chaleur et des particules de ferrosilicium ayant une teneur en silicium ne dépassant pas 20 % et ayant des dimensions situées entre 6 mm et 200 mesh, la totalité du ferrosilicium contenu dans le mélange étant chimiquement inerte à l'égard des autres constituants du mélange.

12 - Couche de surface suivant la revendication 11 caractérisée en ce que le rapport entre le ciment résistant à la chaleur et les particules de ferrosilicium est compris entre 1:1 et 1:8.

13 - Couche de surface pour planchers et structures analogues caractérisée en ce qu'elle consiste en un mélange amélioré comprenant du ciment résistant aux acides et des particules de ferrosilicium ayant une teneur en silicium ne dépassant pas 20 % et ayant des dimensions situées entre 6 mm et 200 mesh, la totalité du ferrosilicium contenu dans le mélange étant chimiquement inerte à l'égard des autres constituants du mélange.

14 - Couche de surface suivant la revendication 13 caractérisée en ce que le rapport entre le ciment résistant aux acides et les particules de ferrosilicium est compris entre 1:1 et 1:8.

**Office européen des brevets**

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.⁴) |
|---|---|---|---|
| X | DE-A- 591 338 (F. EBENER)  * revendication; page 1, lignes 55-59 * | 1,3,5, 7,11, 13 | C 04 B 22/04 // C 04 B 14/34 |
| D,A | US-A-3 668 150 (H.J. HORVITZ)  * revendications 1-4; colonne 4, lignes 10-12 * | 2,4,6, 12,14 | |
| A | FR-A-2 529 873 (C. HERBINGER)  * revendications 1,2; page 1, lignes 1-8 * | 1,3,5, 7,9,10 | |
| A | US-A-2 174 770 (W.S. WILSON)  * revendication 6 * | 11 | **DOMAINES TECHNIQUES RECHERCHES (Int. Cl.⁴)** |
| A | FR-A- 534 657 (L. HEUSY)  * résumé; lignes 5-13 * | 9 | C 04 B 14/34  C 04 B 22/04  C 04 B 28/04 |
| D,A | US-A-1 802 667 (C.A. NEWHALL)  * revendications 1,2,4-6 * | 1,8 | |

Le présent rapport de recherche a été établi pour toutes les revendications

| Lieu de la recherche  BERLIN | Date d'achèvement de la recherche  06-02-1986 | Examinateur  STROUD J.G. |
|---|---|---|